# FASCICULE DE BREVET EUROPEEN

(11) **EP 3 065 880 B1**
(45) Date de publication et mention de la délivrance du brevet: **03.01.2018**
(21) Numéro de dépôt: 14796018.1
(22) Date de dépôt: 03.11.2014
(51) Int. Cl.: B05B 12/14, F16K 31/122

(54) **DISPOSITIF D'ALIMENTATION D'UN PROJECTEUR EN PRODUIT DE REVETEMENT LIQUIDE**
VORRICHTUNG ZUR AUSSTATTUNG EINER SPRITZVORRICHTUNG MIT EINER BESCHICHTUNGSFLÜSSIGKEIT
DEVICE FOR SUPPLYING A SPRAYER WITH A LIQUID COATING PRODUCT

(30) Priorité: 04.11.2013 FR 1360786
(43) Date de publication de la demande: 14.09.2016
(73) Titulaire: SAMES KREMLIN, 38240 Meylan (FR)
(72) Inventeur: ROBERT, Stéphane, F-38240 Meylan (FR)
(74) Mandataire: Lavoix
(86) Numéro de dépôt international: PCT/EP2014/073561
(87) Numéro de publication internationale: WO 2015/063295

(56) Documents cités:
- EP-A1- 2 425 899
- WO-A1-02/09886
- WO-A2-2008/071273
- WO-A2-2009/115201
- US-A- 4 627 465

## Description

La présente invention a trait à un dispositif d'alimentation d'un projecteur en produit de revêtement liquide, notamment dans le cadre d'une installation de projection de produit de revêtement telle qu'utilisée pour l'application d'apprêt, de peinture, ou de vernis sur une carrosserie de véhicule automobile.

Dans le domaine de la projection de produit de revêtement sur des objets à revêtir, qu'il s'agisse de carrosseries de véhicules automobiles ou d'autres matériels, il est connu d'alimenter un projecteur de produit de revêtement avec plusieurs produits, dont l'un est appliqué sur chaque objet à revêtir en fonction des caractéristiques de cet objet. Par exemple, il est connu d'alimenter un projecteur de revêtement de carrosseries de véhicules automobiles avec plusieurs produits de revêtement de teintes différentes, ce qui permet d'adapter la teinte appliquée sur un véhicule.

Pour ce faire, il est connu d'utiliser un dispositif d'alimentation qui comprend au moins une vanne, et en pratique plusieurs vannes, chaque vanne contrôlant l'écoulement d'un produit de revêtement vers le projecteur. Ainsi, US-A-4 627 465 divulgue un dispositif de changement de couleur modulaire qui comprend des sous-ensembles incluant chacun une vanne commandée pneumatiquement et contrôlant l'écoulement d'un produit, tel qu'une peinture, dans un conduit d'alimentation de plusieurs projecteurs.

Par ailleurs, EP-A-1 640 649 divulgue une vanne qui peut être utilisée dans un dispositif d'alimentation d'un projecteur et qui comprend un piston solidaire d'un pointeau équipé d'un diaphragme et destiné à venir sélectivement en appui contre un siège. Le piston est solidaire d'une tige dans laquelle est ménagé un conduit d'alimentation d'une chambre de volume variable, cette tige devant être raccordée à un tuyau souple d'alimentation en air de la vanne. Si le tuyau d'alimentation est bloqué par un élément extérieur, les déplacements du piston peuvent être gênés, ce qui induit les dysfonctionnements de la vanne. Ce risque est d'autant plus marqué que la vanne est installée dans un environnement confiné, tel que l'intérieur du bras d'un robot multiaxe. Or, les installations de projection de produit de revêtement comprennent, de plus en plus souvent, des robots multiaxes qui déplacent des projecteurs en regard des objets à revêtir.

C'est à ces problèmes qu'entend plus particulièrement remédier l'invention en proposant un nouveau dispositif d'alimentation d'au moins un projecteur en produit de revêtement qui comprend une vanne dont le fonctionnement est fiabilisé.

A cet effet, l'invention concerne un dispositif d'alimentation d'au moins un projecteur en produit de revêtement liquide, ce dispositif comprenant au moins une vanne de contrôle de l'écoulement du produit de revêtement vers le projecteur, cette vanne comprenant elle-même un pointeau mobile, un corps de vanne qui définit un volume de circulation du produit de revêtement, un siège d'appui du pointeau en configuration fermée de la vanne et qui porte au moins un raccord de branchement d'un tuyau de circulation de produit de revêtement ou de produit de nettoyage, ainsi que des moyens pneumatiques d'entraînement du pointeau en translation selon un axe d'éloignement/rapprochement par rapport au siège, alors que les moyens pneumatiques d'entraînement comprennent un piston solidaire en translation du pointeau et monté coulissant dans un corps de guidage et que l'axe principal et l'axe d'éloignement/rapprochement d'une vanne sont concourants en un point remarquable et définissent ensemble un plan principal de cette vanne. Conformément à l'invention, l'axe d'éloignement/rapprochement de chaque vanne est inscrit dans un cône centré sur un axe perpendiculaire à l'axe principal et appartenant au plan principal de la vanne, dont le sommet est confondu avec le point remarquable et dont le demi-angle au sommet a une valeur comprise entre 10° et 60°, de préférence ente 20° et 50°, l'axe d'éloignement/rapprochement forme avec l'axe central du cône un angle dont la valeur est supérieure à 5°, de préférence supérieure à 30°, et les axes d'éloignement/rapprochement des différentes vannes sont parallèles.

Grâce à l'invention, les éléments inscrits dans le cône sont aisément accessibles par un seul côté de chaque vanne, ce qui permet d'atteindre un dispositif comprenant plusieurs vannes à travers une seule ouverture, telle que celle pratiquée à cet effet dans le bras d'un robot multiaxe. L'invention confère en outre une bonne compacité à un dispositif comprenant plusieurs vannes, ce qui facilite son intégration dans le bras d'un robot multi-axe, dans lequel d'autres composants peuvent être installés.

Selon des aspects avantageux mais non obligatoires de l'invention, un tel dispositif d'alimentation peut incorporer une ou plusieurs des caractéristiques suivantes, prises dans toute combinaison techniquement admissible :
- Des zones de raccordement sur une vanne de tuyaux de circulation de produit de revêtement ou de produit de nettoyage, d'une part, et de circulation de gaz sous pression d'alimentation des moyens pneumatiques, d'autre part, sont situées d'un même côté d'un second plan contenant l'axe principal et perpendiculaire aux plans principaux respectifs des vannes, alors que les directions de connexion de ces tuyaux sur la vanne sont orientées vers le second plan.
- La direction de connexion sur une vanne de chaque tuyau de circulation de produit de revêtement ou de produit de nettoyage, forme avec l'axe central du cône un angle dont la valeur est supérieure à 5°.
- Les directions de connexion, sur une même vanne, des tuyaux de circulation de produit de revêtement de produit de nettoyage et de gaz sous pression d'alimentation des moyens pneumatiques sont coplanaires.
- La direction de connexion sur une vanne d'un tuyau de circulation de gaz sous pression d'alimentation des moyens pneumatiques est parallèle à l'axe d'éloignement/rapprochement de cette vanne.
- L'axe d'éloignement/rapprochement est incliné d'un angle compris entre 45° et 85°, de préférence compris entre 50° et 60°, par rapport à l'axe principal, alors que les vannes forment chacune, en aval de leur pointeau, une partie d'un collecteur commun à raccorder au projecteur et alors que la partie du collecteur commun formée par une vanne comprend deux branches dont les axes longitudinaux respectifs forment entre eux un angle supérieur à 10°, de préférence compris entre20° et 30°.
- Les axes centraux respectifs des cônes des différentes vannes sont coplanaires.
- Deux rails définissent entre eux une zone de réception et d'immobilisation réversible des corps des différentes vannes.
- Les rails sont chacun montés, par une première extrémité, sur un bloc aval de raccordement à un conduit d'alimentation du projecteur, avec une possibilité de variation de leur écartement selon une direction parallèle au plan dans lequel est définie la petite base du tronc de cône et perpendiculaire à l'axe principal.
- Le dispositif comprend un organe de blocage, à une valeur prédéterminée, de l'écartement des rails, mesuré selon la direction parallèle au plan dans lequel est définie la petite base du tronc de cône et perpendiculaire à l'axe principal.
- Les deuxièmes extrémités des rails sont coincées de façon réversible dans deux encoches formées sur l'organe de blocage.
- L'organe de blocage est pourvu de moyens de mise en pression des corps des vannes contre le bloc aval et entre eux.
- Le dispositif comprend au moins une agrafe élastiquement déformable reliant les deux rails et qui exerce un effort de rapprochement de leurs deuxièmes extrémités l'une vers l'autre, cet effort étant parallèle au plan dans lequel est définie la petite base du tronc de cône et perpendiculaire à un plan médian du dispositif comprenant l'axe principal et les axes d'éloignement/rapprochement des vannes.
- Le corps de vanne de chaque vanne est pourvu, de chaque côté, d'une encoche pour la réception partielle d'un rail.

L'invention sera mieux comprise et d'autres avantages de celle-ci apparaîtront plus clairement à la lumière de la description qui va suivre de cinq modes de réalisation d'un dispositif d'alimentation et d'un outil de montage/démontage conformes à son principe, donnée uniquement à titre d'exemple et faite en référence aux dessins annexés dans lesquels :
- la figure 1 est une vue en perspective d'un dispositif d'alimentation conforme à l'invention ;
- la figure 2 est une vue de côté du dispositif d'alimentation de la figure 1, dans le sens de la flèche II à la figure 1 ;
- la figure 3 est une vue de dessus du dispositif des figures 1 et 2;
- la figure 4 est une coupe axiale, selon un plan médian P2 et le long de la ligne IV-IV, à la figure 3 ;
- la figure 5 est une coupe à plus grande échelle, dans le plan de la figure 4, d'une vanne appartenant au dispositif des figures 1 à 4, cette vanne étant dans une première configuration ouverte ;
- la figure 6 est une vue analogue à la figure 5 lorsque la vanne est dans une deuxième configuration fermée ;
- la figure 7 est une coupe en perspective selon la ligne VII-VII à la figure 5;
- la figure 8 est une vue en perspective d'un sous-ensemble appartenant à la vanne des figures 5 à 7 ;
- la figure 9 est une vue en perspective éclatée et en coupe axiale du sous-ensemble de la figure 8 ;
- la figure 10 est une coupe analogue à la figure 5, à plus petite échelle, permettant de repérer une zone d'accès au sous-ensemble des figures 8 et 9 ;
- la figure 11 est une vue partielle, en perspective et par l'arrière, du dispositif des figures 1 à 4 ;
- la figure 12 est une coupe à plus grande échelle selon la ligne XII-XII à la figure 2;
- la figure 13 est une coupe selon la ligne XIII-XIII à la figure 3 à la même échelle que la figure 12 ;
- la figure 14 est une représentation schématique de certains axes et points remarquables définis par le dispositif des figures 1 à 13 ;
- la figure 15 est une vue en perspective comparable à la figure 1 pour un dispositif conforme à un deuxième mode de réalisation de l'invention, sans représentation d'un bras de robot ;
- la figure 16 est une coupe longitudinale d'un outil représenté en configuration d'utilisation à la figure 15 ;
- la figure 17 est une vue, en perspective éclatée partielle et à plus grande échelle, de l'outil de la figure 16 ;
- les figures 18 et 19 sont des coupes respectivement analogues aux figures 5 et 6, pour un dispositif conforme à un troisième mode de réalisation ;
- la figure 20 est une vue en perspective comparable à la figure 1 pour un dispositif conforme à un quatrième mode de réalisation de l'invention ;
- la figure 21 est une vue partielle, en perspective et par l'arrière, du dispositif de la figure 20 ; et
- la figure 22 est une vue en perspective d'un dispositif conforme à un cinquième mode de réalisation de l'invention.

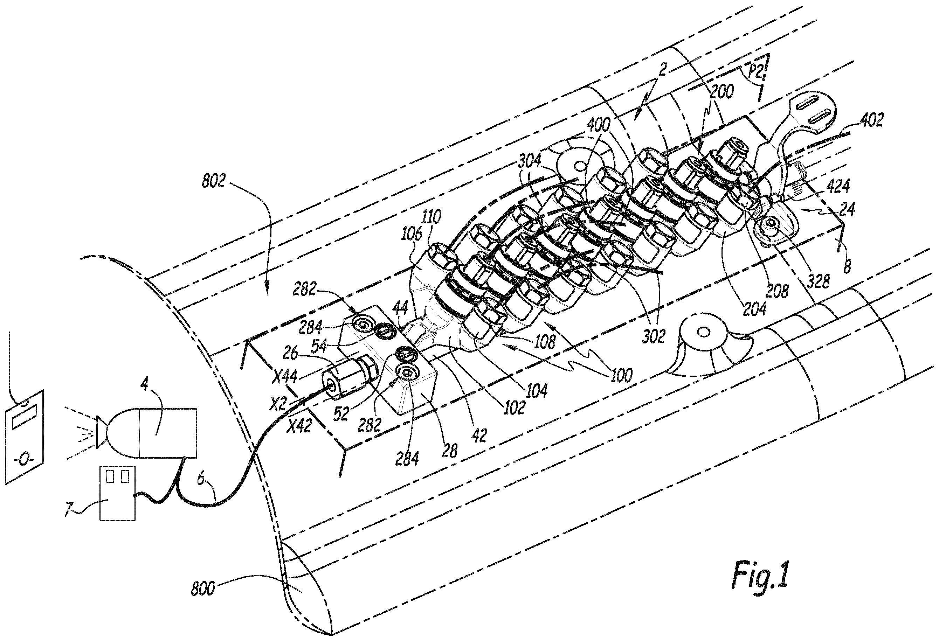

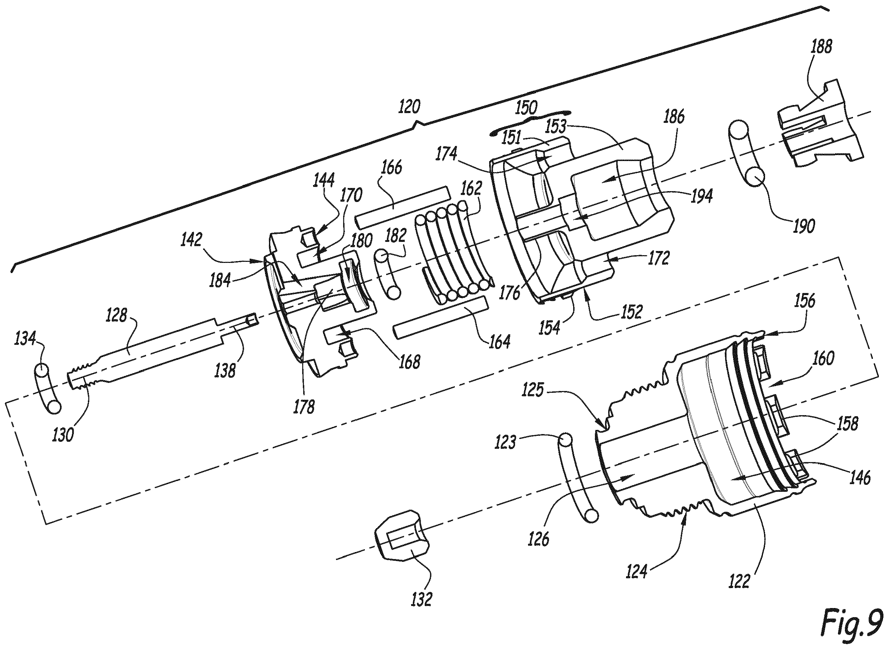

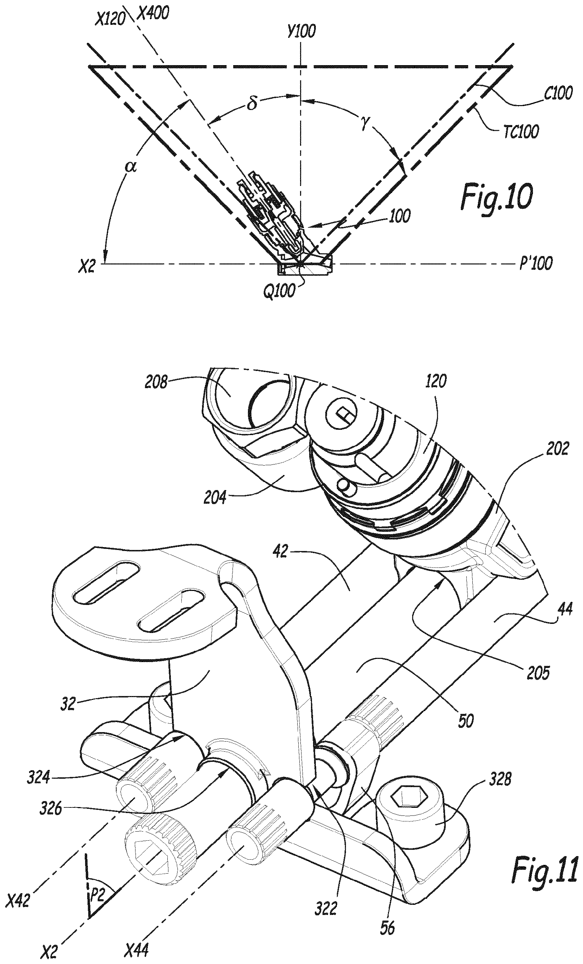

Le dispositif 2 représenté aux figures 1 à 12 est utilisé pour alimenter en produit de revêtement liquide un projecteur automatique 4 représenté de façon très schématique, uniquement à la figure 1. Le dispositif 2 est relié au pistolet 4 par un tuyau souple 6 et s'étend, le long d'un axe longitudinal X2, entre une extrémité avant 22 et une extrémité arrière 24.

Le projecteur 4 est de type électrostatique et raccordé à une unité haute tension 7. Le pistolet 4 est utilisé pour projeter un nuage de gouttelettes de produit de revêtement chargées à la haute tension vers des objets O à revêtir, représentés de façon schématique par une plaque suspendue à un crochet d'un convoyeur.

En variante, le projecteur peut ne pas être électrostatique.

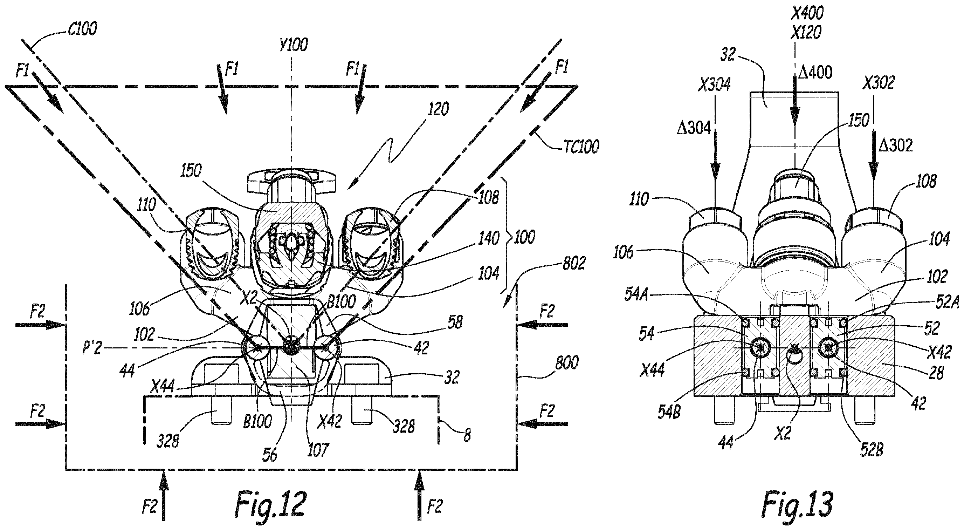

Le dispositif 2 est installé à l'intérieur du bras 800 d'un robot multiaxe qui, pour la clarté du dessin, est représenté en traits mixtes uniquement aux figures 1 et 12. Le bras 800 définit une ouverture 802 d'accès au dispositif 2 par le dessus à la figure 1. Cette ouverture 802 est normalement obturée par un capot amovible qui n'est pas représenté à la figure 1.

L'extrémité avant 22 est équipée d'un raccord 26 permettant le branchement du tuyau souple 6. Lorsqu'il est utilisé, le dispositif 2 est monté sur une platine de support 8 intégrée au bras 800. En variante, il s'agit de toute autre pièce structurelle permettant de soutenir le dispositif 2, notamment dans le cas où le dispositif 2 peut être utilisé pour alimenter un pistolet manuel de produit de revêtement déplacé en regard des objets O par un opérateur.

Le dispositif 2 comprend un bloc avant 28 pourvu de deux perçages 282 de passage de vis 284 d'immobilisation du bloc avant 28 sur la structure 8.

Un organe de support 32 est prévu au niveau de l'extrémité arrière 24 du dispositif 2 et il est équipé d'orifices non représentés de passage de vis 328 de fixation de l'organe 32 sur la structure 8.

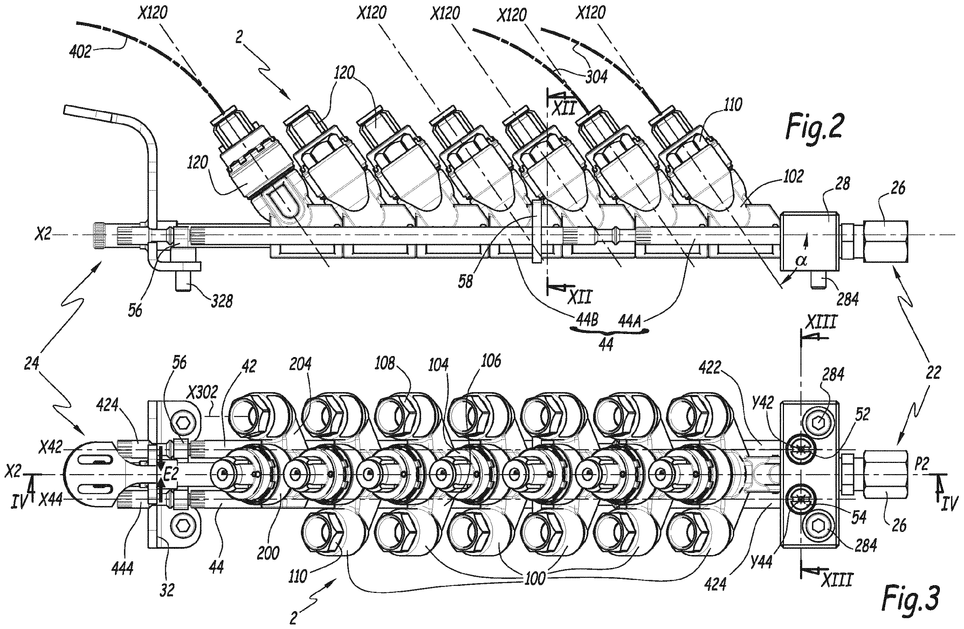

Entre le bloc avant 28 et l'organe support 32, le dispositif 2 comprend deux rails 42 et 44 qui s'étendent chacun selon un axe longitudinal X42, respectivement X44, parallèle à l'axe X2. Les rails 42 et 44 sont identiques. Comme cela ressort de la figure 2, pour le rail 44, et en fonction de la longueur du dispositif 2 le long de l'axe X2 qui dépend du nombre de ses vannes, ces rails peuvent être formés de deux parties 44A et 44B mises bout à bout. Ceci est facultatif.

Entre le bloc avant 28 et l'organe support arrière 32 sont disposées six vannes à recirculation identiques 100 et une vanne 200 sans recirculation. Les six vannes 100 sont disposées, le long de l'axe X2, entre le bloc avant 28 et la vanne 200. En d'autres termes, le long de l'axe X2, la vanne 200 est située en arrière des vannes 100.

Chaque vanne 100 comprend un corps de vanne 102 qui est avantageusement réalisé en métal et qui définit deux branches latérales 104 et 106 sur lesquelles sont respectivement montés deux raccords 108 et 110 permettant d'immobiliser deux tuyaux souples 302 et 304 qui servent respectivement à amener un produit de revêtement liquide au corps de vanne 102 et à évacuer ce produit vers un circuit de recirculation, ceci afin d'éviter la stagnation du produit de revêtement dans une vanne 100 lorsque celle-ci est fermée. Pour la clarté du dessin, les tuyaux 302 et 304 associés aux deux vannes 100 les plus proches du bloc avant 28 sont représentés aux figures 1, 2 et 7 par leurs traits d'axe. Ils ne sont pas représentés pour les autres vannes, ni sur les autres figures.

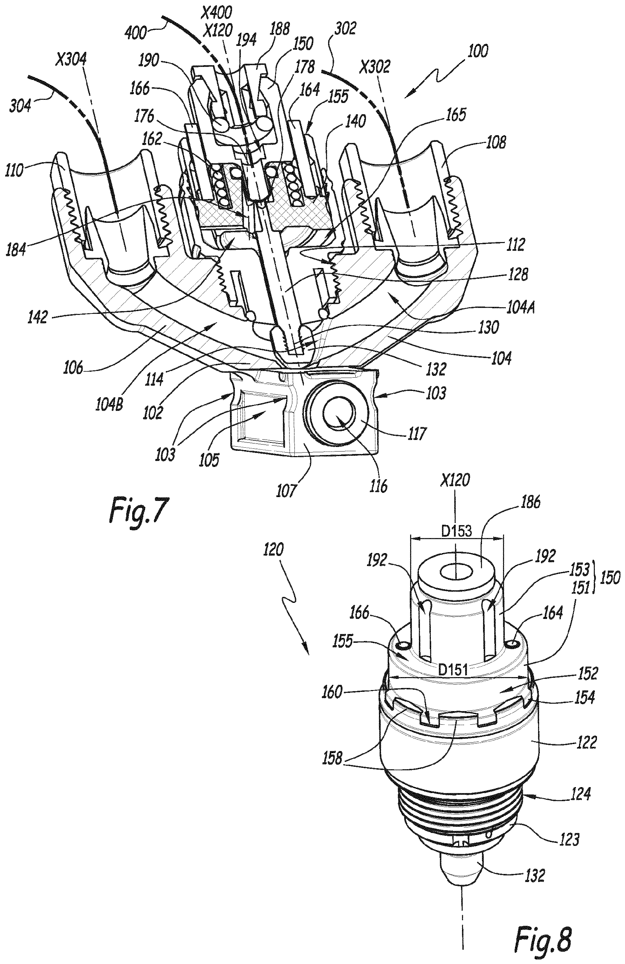

Les raccords 108 et 110 définissent deux zones, visibles notamment à la figure 7, de raccordement des tuyaux 302 et 304 sur le corps de vanne 102.

On retrouve une configuration comparable pour la vanne 200 qui définit des axes X120 et X302 comme les vannes 100, mais pas d'axe X304. Les axes X120 et X302 sont coplanaires. Toutefois, ceci n'est pas obligatoire.

La vanne 200 est comparable aux vannes 100 mais s'en distingue par le fait que son corps 202 comprend une seule branche latérale 204 sur laquelle un tuyau souple 402 est branché au moyen d'un raccord 208, comme représenté en traits mixtes uniquement aux figures 1 et 2. La vanne 200 est alimentée en produit de nettoyage, par exemple en eau additivée, sans qu'il soit nécessaire de prévoir une recirculation de ce produit, d'où l'absence d'une deuxième branche latérale dans la vanne 200. Pour le reste, sauf mention contraire ci-après, la vanne 200 est construite et fonctionne de la même façon que les vannes 100.

Chaque vanne 100 ou 200 comprend un sous-ensemble 120 vissé sur son corps 102 ou 202, le long d'un axe X120 contenu dans un plan médian par rapport aux axes X42 et X44 et qui forme avec l'axe X2 un angle α de l'ordre de 55°. En pratique, la valeur de l'angle α est choisie entre 45° et 85°, de préférence entre50° et 60°.

Les sous-ensembles 120 sont tous identiques, y compris celui de la vanne 200.

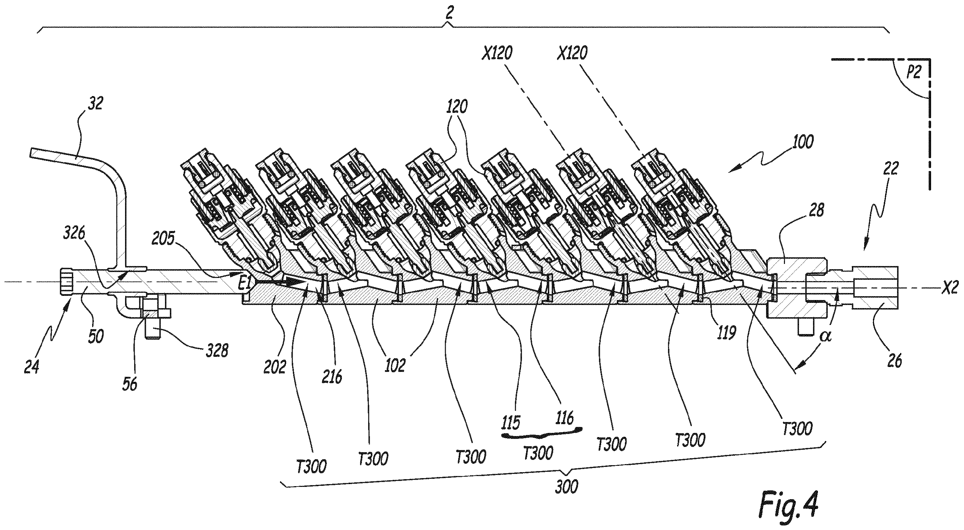

Comme cela ressort notamment des figures 2 et 4, les axes X120 des différents sous-ensembles 120 sont tous inclinés dans le même sens par rapport à l'axe X2.

En fonctionnement, un tuyau souple 400 d'alimentation en air est raccordé sur chaque vanne 100 ou 200 et pénètre dans le sous-ensemble 120 de cette vanne selon une direction Δ400 dirigée vers le corps 102 ou 202 et alignée sur un axe central X400 de l'extrémité du tube 400 engagée dans le sous-ensemble 120. Les axes X120 et X400 sont parallèles ; en pratique, ils sont confondus. Sur les figures, la direction Δ400 est représentée par une flèche.

L'axe X120 du sous-ensemble 120 d'une vanne 100 est sécant avec l'axe X2 en un point remarquable que l'on note Q100. On note P100 un plan contenant l'axe X2 et l'axe X120 d'une vanne. Ce plan P100 est un plan médian pour cette vanne. On note P'100 un plan transversal perpendiculaire au plan P100 d'une vanne 100 et contenant l'axe X2. De la même façon, on définit un point remarquable Q200, un plan médian P200 et un plan transversal P'200 pour la vanne 200.

En pratique, les axes X120 des différentes vannes 100 et 200 sont coplanaires et les plans P100 et P200 des différentes vannes sont confondus en un plan P2 qui est un plan médian du dispositif 2. De même, les plans P'100 et P'200 sont confondus en un plan transversal commun P'2. En fait, les axes X120 des différentes vannes sont parallèles entre eux.

On note Y100 un axe passant par le point Q100 d'une vanne 100, perpendiculaire à l'axe X2 et situé dans son plan P100 ou P2, c'est-à-dire coplanaire aux axes X2 et X120. L'axe Y100 est perpendiculaire au plan P'2.

On note C100 un cône imaginaire centré sur l'axe Y100 d'une vanne 100 et dont le sommet est formé par le point Q100. Le demi-angle au sommet γ du cône C100 a une valeur comprise entre 10° et 50°, de préférence entre 30° et 45°. Par exemple, l'angle γ peut avoir une valeur égale à 44°, ce qui est toutà fait avantageux.

L'axe X120 est inscrit dans le cône C100.

On note δ un angle défini entre les axes X120 et Y100, au sein du cône C100. La somme des valeurs des angles α et δ vaut 90°. L'angle δ a une valeur supérieure à 5° et inférieure à 45°, de préférence entre 30° et 400. En d'autres termes, les axes X120 ne sont ni perpendiculaires ni quasiment perpendiculaires aux plans P2 et P'2.

On considère, pour chaque vanne 100, un tronc de cône TC100 centré sur l'axe Y100, dont le demi-angle au sommet est égal à l'angle γ, dont la petite base B100, qui est un disque contenu dans le plan P'2, a un diamètre inférieur ou égal à 20 mm et dont la longueur axiale, selon l'axe Y100, est inférieure ou égale à 100 mm. Le sous-ensemble 120 de chaque vanne 100 est inclus dans son tronc de cône TC100. Il en va de même pour le sous-ensemble 120 de la vanne 200.

On note respectivement X302 et X304 les axes des extrémités des tuyaux 302 et 304 engagées dans les raccords 108 et 110. On note respectivement Δ302 et Δ304 les directions d'engagement des tuyaux 302 et 304 dans les raccords 108 et 110, ces directions étant dirigées vers le corps 102, représentée par des flèches sur les figures et alignées sur les axes X302 et X304, eux-mêmes alignés avec les axes centraux respectifs des raccords 108 et 110. Les axes X120, X302 et X304 et les directions Δ302, Δ304 et Δ400 sont coplanaires, dans le plan de coupe de la figure 7. Ceci facilite l'orientation du faisceau de tuyaux 302, 304 et 400 à l'intérieur du bras 800 puisque ces tuyaux sont globalement orientés dans la même direction, vers la droite à la figure 1 ou vers la gauche à la figure 2.

Les raccords 108 et 110 définissent des zones de raccordement des tuyaux 302 et 304 sur le corps 102. Une douille 188 élastiquement déformable définit une zone de raccordement du tuyau 400 sur le sous-ensemble 120. Les éléments 108, 110 et 188 sont situés d'un même côté du plan P'2. En outre, les directions Δ302, Δ304 et 400Δ sont orientées, à partir des éléments 108, 110 et 120, vers le plan P'2, sur un même côté de celui-ci.

Ainsi si l'on considère que le plan P'2 est horizontal, comme représenté sur les figures, le cône C100 est situé au dessus de ce plan et les directions Δ302, Δ304 et Δ400 sont orientées vers le bas, à partir des zones formées par les éléments 108, 110 et 188 qui sont situés au dessus de ce plan.

Grâce à cette disposition, l'accès au sous-ensemble 120, notamment pour le montage et le démontage des tuyaux souples 302, 304 et 400, ainsi que pour le serrage et le desserrage des raccords 108 et 110 et de la douille 188 peut être effectué à l'intérieur du cône C100, d'un même côté du plan P'2, sans interférence notable avec les vannes 100 ou 200 adjacentes et avec l'environnement direct du dispositif.

Ceci facilite grandement le travail d'un opérateur, à la fois lors de l'assemblage initial du dispositif 2 et lors des opérations de maintenance ultérieures, assurées par un accès réduit sur une seule face « supérieure », perpendiculaire à l'axe Y100, du dispositif 2 et non au périmètre ou demi périmètre d'axe X2 traditionnellement utile pour un dispositif équivalent de génération antérieure.

En effet, si l'on considère une vanne 100 dans le plan de la figure 12, alors celle-ci est entourée par le bras 800 du robot, sur ses deux côtés latéraux gauche et droit et par le dessous. Elle demeure accessible par le dessus, à travers l'ouverture 802 dans laquelle s'inscrivent le cône C100 et le tronc de cône TC100.

En particulier, on peut accéder à la vanne 100 dans les directions des flèches F1 à la figure 12, sans qu'il soit nécessaire d'y accéder dans les directions des flèches F2, cet accès étant d'ailleurs gêné par la présence du bras de robot 800.

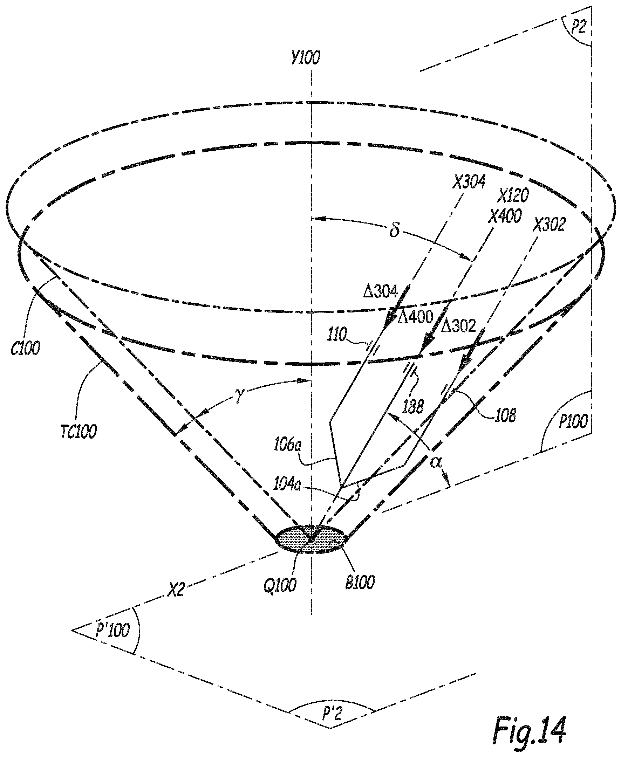

En comparant les figures 1, 2, 7, 10, 12 et 14 on comprend que les départs des tuyaux 302, 304 et 400, qui sont positionnés par les éléments 108, 110 et 188, sont situés dans le cône C100 et le tronc de cône TC100.

En pratique, compte tenu de leurs diamètres respectifs, les tubes d'alimentation en produit de revêtement 302 et 304 sont sensiblement plus rigides que les tubes d'alimentation en air 400. Ainsi, dans une solution possible, quoi que moins préférée, les axes X302 et X304 sont coplanaires au sein du cône C100, alors que l'axe X120 peut être disposé dans un autre plan.

Dans ce cas, il est envisageable que l'axe X120 forme, avec l'axe X2, un angle α dont la valeur est plus importante que celle de l'angle formé entre les axes X302 et X2 ou X304 et X2 en projection sur un plan parallèle à celui de la figure 2.

Chaque sous-ensemble 120 comprend un corps 122 pourvu d'un filetage externe 124 destiné à coopérer avec un taraudage 112 d'axe X120 ménagé dans le corps 102 ou 202 de chaque vanne 100 ou 200. Le corps 122 est percé d'un alésage 126 dans lequel est disposée une tige 128 dont une première extrémité 130 est équipée d'un pointeau 132. L'étanchéité entre le corps fileté 122 et la tige 128 peut être obtenue par des joints racleurs ou par un pointeau à soufflet, ce qui n'est pas représenté dans un but de simplification.

Un joint torique 123 est monté dans une gorge périphérique externe 125 du corps 122 et isole le filetage 124 et le taraudage 112 du produit circulant dans la vanne.

Un piston 140 est solidaire, au moins en translation le long de l'axe X120, et en pratique en rotation également, avec une deuxième extrémité 138 de la tige 128, opposée à l'extrémité 130. En pratique, la tige 130 et le piston 140 peuvent être solidarisés par collage, clipsage, sertissage ou frettage.

On note 142 la face avant du piston orientée vers le pointeau 132 et 144 la face arrière de ce piston orientée à l'opposé.

Le corps 122 est pourvu d'une cavité 146 de réception et de guidage du piston 140, le long de l'axe X120.

Le sous-ensemble 120 comprend également une culasse 150 qui est assemblée au corps fileté 122 pour définir une double chambre dans laquelle coulisse le piston 140. Pour ce faire, la culasse 150 est pourvue, sur sa surface radiale externe 152 de dents 154 qui s'étendent vers l'extérieur, radialement à l'axe X120, par rapport à la surface 152, et qui forment des reliefs en saillie. D'autre part, le corps 122 est équipé, sur son bord 156 opposé au pointeau 132, de créneaux 158 qui définissent entre eux des zones 160 de réception des dents 154. Ainsi, lorsque les éléments 122 et 150 sont assemblés, les reliefs 154 et 158 coopèrent pour solidariser ces éléments à la fois axialement et en rotation par rapport à l'axe X120.

En variante, les créneaux 158 et les zones 160 peuvent être prévus sur la culasse 150, alors que le corps de guidage est équipé de reliefs en saillie, tels que les dents 154. Selon une autre variante, d'autres modes de solidarisation, des pièces 122 et 150, en rotation et en translation par rapport à l'axe X120, sont envisageables, notamment un collage ou un soudage de ces pièces.

Le sous-ensemble 120 comprend également un ressort 162 intercalé entre le piston 140 et la culasse 150 et deux pions 164 et 166 respectivement montés dans deux logements 168 et 170 ménagés de part et d'autre de l'axe X120. En d'autres termes, les logements 168 et 170 sont diamétralement opposés par rapport à l'axe X120. Chaque pion 164 et 166 s'étend selon une direction parallèle à l'axe X120 et est engagé dans un perçage traversant 172 respectivement 174 de la culasse 150. Les perçages 172 et 174 sont, eux aussi, diamétralement opposés par rapport à l'axe X120.

En variante, plus de deux pions analogues aux pions 164 et 166 peuvent être prévus, de préférence régulièrement répartis autour de l'axe X120.

La culasse 150 est pourvue d'un embout 176, en forme de tronçon de tube, engagé dans une chambre de transfert 178 ménagée dans le piston 140 et centrée sur l'axe X120. La chambre de transfert 178 débouche sur la face 144 du piston 140. Du côté opposé, elle est obturée par l'extrémité 138 de la tige 130. A proximité de son débouché sur la face 144, la chambre de transfert 178 est pourvue d'une gorge radiale interne 180 dans laquelle est reçu un joint torique 182 qui est également en contact avec la surface radiale externe de l'embout 176. Ainsi, l'embout 176 est engagé de façon étanche dans la chambre de transfert 178.

L'embout 176 est monobloc avec le reste de la culasse 150. En variante, il peut être rapporté sur cette culasse.

Un conduit 184 relie la chambre de transfert 178 à la face avant 142 du piston 140.

A l'opposé de l'embout 176, la culasse 150 est pourvue d'un alésage 186 dans lequel est engagée la douille 188 élastiquement déformable. Un joint torique 190 est également reçu dans l'alésage 186, entre la douille 188 et le fond de cet alésage.

La surface radiale externe 152 de la culasse 150 est étagée. En d'autres termes, la culasse 150 comprend une première portion 151, au niveau de laquelle la surface radiale externe 152 présente un premier diamètre extérieur D151 et une deuxième portion 153 au niveau de laquelle la surface extérieure 152 présente un deuxième diamètre D153 strictement inférieur au diamètre D151. Une surface annulaire 155, perpendiculaire à l'axe X120 et centrée sur celui-ci, relie les deux portions cylindriques de la surface 152 de rayon D151 et D153. Au niveau de la portion 153, la culasse 150 est pourvue de quatre encoches 192 qui sont régulièrement réparties autour de l'axe X120 et longitudinales, c'est-à-dire qui s'étendent parallèlement à l'axe X120. Pour l'essentiel, l'alésage 186 est ménagé dans la portion 153 de la douille 150.

Comme la culasse 150 est immobilisée sur le corps de guidage 122 par les reliefs 154 et 158, les encoches 192 sont solidaires de ce corps. En ce sens, le corps de guidage est équipé des encoches 192.

A l'exception de la tige 128 qui est en métal ainsi que du ressort 162, les éléments constitutifs du sous-ensemble 120 sont réalisés en matériau synthétique. En particulier, le pointeau 132 peut être fabriqué en Nylon (marque déposée).

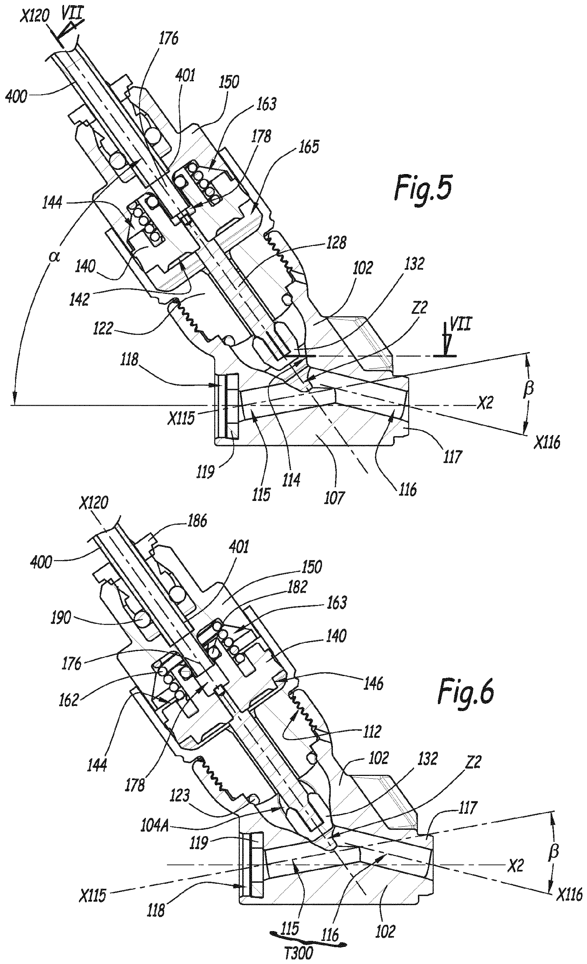

Le corps 102 de la vanne 100 définit un siège 114 de réception du pointeau 132, le pointeau 132 étant mobile par rapport à ce siège entre une première configuration représentée aux figures 5 et 7, dans laquelle le pointeau 132 est éloigné du siège 114 et une deuxième position représentée à la figure 6, où le pointeau 132 est en appui contre le siège 114. Dans la configuration des figures 5 et 7, la vanne 100 est ouverte. Dans la configuration de la figure 6, elle est fermée.

L'axe longitudinal X2 du dispositif 2 définit une direction dans laquelle le produit de revêtement s'écoule globalement, en aval des pointeaux des différentes vannes, en direction du bloc avant 28.

Comme cela ressort plus particulièrement de la figure 4, un collecteur commun 300 est formé par des tronçons de conduit T300 ménagés dans les corps 102 et 202 des vannes 100 et 200, ces tronçons de conduit étant mis bout à bout, le long de l'axe X2.

Chaque tronçon de conduit T300 ménagé dans le corps 102 d'une vanne 100 comprend deux branches, à savoir une branche amont 115 et une branche aval 116. A la différence des vannes 100, le tronçon de conduit T300 ménagé dans le corps 202 de la vanne 200 comprend uniquement une branche aval 216.

Au niveau de son extrémité aval, chaque branche 116 est entourée par une portion cylindrique 117 de dimension adaptée pour pénétrer dans un alésage 118 du corps 100 d'une autre vanne, cet alésage 118 étant ménagé autour de l'embouchure de la branche amont 115 de ce corps. En d'autres termes, la portion cylindrique ou « nez » 117 d'une vanne 100 est engagée dans l'alésage ou « cuvette » 118 de la vanne 100 située en aval, ce qui permet un raccordement étanche entre les tronçon T300 du collecteur 300 définis par les différents corps 102 et 202. Comme visible à la figure 4, le bloc avant 28 comprend une « cuvette » compatible avec le « nez » de la vanne 100 la plus proche de ce bloc. De même, le corps 202 de la vanne 200 comprend un « nez » introduit dans la cuvette de la vanne 100 la plus amont.

Un joint 119 est disposé au fond de chaque cuvette et reçoit en appui le nez 117 de la vanne située immédiatement en amont.

Comme il ressort de la comparaison des figures 5 et 6, l'axe X120 constitue un axe d'éloignement/rapprochement du pointeau 132 par rapport au siège 114.

Dans la configuration de la figure 6, et compte tenu de l'inclinaison de l'axe X120 de l'angle α par rapport à l'axe X2, une zone morte pourrait être créée en aval du pointeau 132 si le tronçon T300 du collecteur 300 formé par les branches 115 et 116 était rectiligne. Pour éviter la création d'une telle zone morte et pour favoriser la turbulence de l'écoulement, facilitant ainsi la qualité du rinçage et à la réduction de la consommation des produits de rinçage, les branches 115 et 116 sont inclinées l'une par rapport à l'autre. Plus précisément, un axe longitudinal X115 et un axe longitudinal X116 dés branches 115 et 116 d'un corps 102 forment entre eux un angle β supérieur à 10°, de préférence compris entre 20° et 30°. En pratique, l'angle 13 peut être choisi égal à environ 25°.

Ainsi, dans la configuration de la figure 6, une zone Z₂ située immédiatement en aval du pointeau 132 est léchée par le produit de revêtement ou le liquide de nettoyage circulant dans le collecteur 300, ce qui évite l'accumulation et le séchage de produit de revêtement dans cette zone.

Par défaut, la vanne 100 est fermée sous l'action du ressort 162 qui exerce sur le piston 160 un effort élastique qui plaque le pointeau 132 contre le siège 114. Le ressort 162 est disposé dans une chambre 163 de volume variable qui est définie entre la face arrière 144 du piston 140 et la culasse 150, autour de l'embout 176.

D'autre part, une deuxième chambre de volume variable 165 est définie à l'intérieur de la cavité 146, entre la face avant 142 du piston 140 tournée vers le pointeau 132 et le fond de la cavité 146, opposé au bord 156. Le conduit 184 constitue des moyens de mise en communication fluidique entre les chambres 165 et 178.

En fonctionnement, le tuyau souple 400 raccordé sur chaque vanne 100 ou 200, est engagé dans la culasse 150, jusque dans un alésage 194 qui débouche dans l'embout 176. Pour la clarté du dessin, le tuyau souple est visible aux figures 5 et 6 et représenté par sont trait d'axe aux figures 1 et 7 uniquement. L'alésage constitue une zone de raccordement du tuyau 400 sur le sous-ensemble 120. Le diamètre de l'alésage 194 est adapté au diamètre extérieur du tuyau 400 pour éviter des fuites d'air. De même en est-il du joint torique 190. La douille 188 immobilise l'extrémité 401 du tuyau 400 dans l'alésage 194.

Lorsqu'il convient de décoller le pointeau 132 du siège 114, c'est-à-dire lorsqu'il convient de faire passer la vanne de la configuration fermée de la figure 6 à la configuration ouverte des figures 5 et 7, de l'air est envoyé à la vanne 100, à travers le conduit 400, à partir d'une unité non représentée d'alimentation commandée des vannes 100 et 200 en air. L'air acheminé par le tuyau 400 pénètre dans l'embout 176 et s'écoule vers la chambre de transfert 178. Il ne peut pas s'écouler en direction de la chambre de volume variable 163 car il en est empêché par le joint torique 182. L'air s'écoule donc, à partir de la chambre de transfert 178, à travers le conduit 184 d'où il pénètre dans la chambre 165. Lorsque la quantité d'air injectée par le tuyau 400 est suffisante, cette quantité d'air qui se répand dans la chambre 165, monte en pression et repousse le piston 140 à l'encontre de l'effort élastique exercé par le ressort 162, ce qui éloigne le pointeau 132 du siège 114. On parvient alors dans la configuration des figures 5 et 7.

Au cours de ce déplacement du piston 140, l'embout 176, qui est fixe comme le reste de la culasse 150, coulisse dans la chambre de transfert 178, de façon étanche grâce au joint 182.

Lorsque l'unité d'alimentation cesse de fournir de l'air sous pression, la pression d'air dans la chambre 165 diminue et le ressort 162 repousse le piston 140 et le pointeau 132 en direction du siège 114.

Ainsi, le piston 140, donc la tige 130 et le pointeau 132, sont efficacement commandés en translation axiale le long de l'axe X120, sans qu'il soit nécessaire que le tuyau souple 400 soit déplacé au cours des mouvements du piston. Un éventuel contact entre ce tuyau 400 et son environnement ne gêne pas le pilotage du pointeau 132 par rapport au siège 114 de la vanne 100. Même si le tuyau souple 400 peut être courbé avant de pénétrer dans la culasse 150, notamment lorsque le dispositif 2 est disposé à l'intérieur du bras d'un robot multiaxe dont un capot recouvre les différents tuyaux souples 400, ceci n'a pas d'influence négative sur le pilotage des différentes vannes 100 et 200.

Comme cela ressort de la figure 7, chaque branche 104 et 106 du corps 102 définit un conduit 104A, 106A de circulation du produit de revêtement entre les raccords 108 et 110, ces conduits 104A et 106A se rejoignant autour de la tige 128 et/ou du pointeau 132. Ainsi, en configuration fermée de la vanne 100, le produit de revêtement circule autour de la tige 128, du tuyau 302 vers le tuyau 304 sans être bloqué à l'intérieur de la vanne 100. Au contraire, lorsque la vanne 100 est en configuration ouverte représentée aux figures 5 et 7, le produit de revêtement s'écoule dans le collecteur 300, notamment dans la branche aval 116 de la vanne 100 en question, en direction du bloc avant 28.

On remarque à la figure 7 que les pions 164 et 166 font saillie le long et autour de la portion 153 de la culasse 150 lorsque le piston 150 est repoussé à l'encontre de l'action du ressort 162 par la pression régnant dans la chambre 165. Au contraire, lorsque le piston est dans la configuration de la figure 6, les pions 164 et 166 ne dépassent pas de la surface annulaire plane 155. Les pions 164 et 166 sont alors dans la configuration visible à la figure 8. Ces pions 164 et 166 permettent donc de déduire la position du piston 140 dans la cavité 146, et par là même, la position du pointeau 132 par rapport au siège 114. Ces pions forment donc des témoins de la position du pointeau 132. Comme ils sont disposés de part et d'autre de l'axe X120, au moins l'un d'entre eux est visible pour un observateur du dispositif 2, quel que soit le sens d'observation d'une vanne, même si la portion 153 masque l'autre pion. L'orientation angulaire des pions 164 et 166 autour de l'axe X120 dépend du degré de serrage de chaque sous-ensemble 120 dans le corps 102 ou 202 de la vanne à laquelle il appartient, ainsi que de l'aléa de fabrication des vannes, notamment de la position angulaire des départs de filetage. Ces aléas anticipés permettent de limiter les contraintes de fabrication et d'assemblage des culasses et corps de guidage de chaque sous-ensemble 102, réduisant ainsi les coûts de fabrication.

L'organe support 32 est équipé d'une vis 50 qui traverse un alésage taraudé 326 de l'organe 32 et qui permet d'exercer sur la vanne 200 un effort E1 qui pousse l'ensemble des vannes contre le bloc 28, ce qui assure à la fois une immobilisation mécanique de ces vannes les unes par rapport aux autres et l'isolation fluidique du collecteur 300 par rapport à l'extérieur du dispositif 2. Lorsque les vannes 100 et 200 ont été mises en place entre les rails 42 et 44, la vis 50 est serrée contre le corps 202 qui est pourvu d'un logement borgne 205 de réception de la pointe avant de la vis 50. Lorsqu'il convient de démonter le dispositif 2, notamment pour retirer une vanne 100 ou 200, la vis 50 est dévissée dans l'alésage 326. L'extrémité arrière de la vis 50 est pourvue d'un logement creux à six pans permettant de recevoir une clef mâle d'entraînement en vissage/dévissage par rapport à l'organe 32.

On relève sur la figure 4 que la succession des branches 115, 116 et 216 des différentes vannes 100 et 200 confère au collecteur 300 une forme en zigzag dans le plan de la figure 4 qui contient les différents axes X120 des vannes.

Le rail 42 est monté sur le bloc avant 28 au moyen d'un écrou flottant 52, en ayant une possibilité de translation perpendiculaire à l'axe X2, parallèlement au plan P'2. Cette translation est autorisée par le jeu radial présent entre l'écrou 52 et le bloc avant 28 et la déformation élastique de deux joints toriques 52A et 52B qui le maintiennent en position en l'absence d'effort de montage ou d'extraction de vannes 100 ou 200. De la même façon, le rail 44 est monté sur le bloc avant 28 au moyen d'un écrou flottant 54 et avec une possibilité de translation perpendiculaire à l'axe X2, parallèlement au plan P'2. Cette translation est autorisée par le jeu radial présent entre l'écrou 54 et le bloc avant 28 et la déformation élastique des deux joints toriques 54A et 54B qui le maintiennent en position en l'absence d'effort de montage ou d'extraction de vannes 100 ou 200.

On note 422 l'extrémité avant du rail 42 engagée dans le bloc avant 28. On note 424 l'extrémité arrière du rail 42, qui coopère avec l'organe 32. De la même façon, on note respectivement 442 et 444 les extrémités avant et arrière du rail 44. L'organe 32 est pourvu de deux encoches 322 et 324 dans lesquelles sont respectivement engagées les extrémités arrière 424 et 444. Lorsque les extrémités 424 et 444 sont respectivement engagées dans les encoches 322 et 324, l'organe 32 définit l'écartement entre les rails 42 et 44, mesuré selon une direction perpendiculaire aux axes X2 et X120 et parallèle au plan P'2.

Les encoches 322 et 324 sont situées de part et d'autre du plan P2 et ouvertes vers l'extérieur par rapport à celui-ci.

Une agrafe élastique 56 est montée autour des rails 42 et 46 et exerce sur ceux-ci un effort de rapprochement E2 perpendiculaire au plan P2 et qui tend à maintenir les extrémités 424 et 444 fermement engagées dans les encoches 322 et 324. Ainsi, les rails 42 et 44 pincent par défaut entre eux les corps 102 et 202 des vannes 100 et 200. Pour assurer une bonne immobilisation des corps 102 et 202 par les rails 42 et 44, et comme il ressort plus particulièrement de la figure 7, le corps 102 d'une vanne 100 est pourvu, de part et d'autre d'un talon 107 dans lequel sont ménagées les branches 115 et 116, de deux encoches latérales 103 dans lesquelles sont respectivement insérés les rails 42 et 44 dans la configuration des figures 1 à 4. En fait, les côtés des talons 107 sont pourvus d'évidements latéraux 105. Les encoches 103 sont ménagées respectivement à proximité du bord avant et du bord arrière des talons et entre un évidement 105 et la branche 104 ou 106 adjacente, comme visible à la figure 7.

Par ailleurs, un guide 58 est également prévu, ce guide enserrant les rails 42 et 44 et venant chevaucher le talon des vannes 100 et 200, il s'oppose à un mouvement d'extraction des vannes 100 et 200 de l'espace défini entre les rails 42 et 44, ce mouvement pouvant être induit par la force de traction des divers tuyaux d'alimentation 302, 304 et 400.

Lorsque le nombre de vannes 100 et 200 est important, des guides 58 sont placés à intervalles réguliers sur les rails 42 et 44 pour garantir un bon maintien de l'ensemble de celles-ci.

Lorsqu'il convient d'introduire une vanne 100 dans le dispositif 2 ou de retirer une telle vanne, notamment pour une opération de maintenance, il convient d'exercer un effort sur la vanne globalement suivant l'axe Y100, afin d'écarter les rails 42 et 44 à l'encontre de l'effort E2, dans le plan P'2 et perpendiculairement à l'axe X2. Cet écartement des rails 42 et 44 est rendu possible par l'écrasement des joints 52A, 52B, 54A et 54B qui maintiennent les écrous flottants 52 et 54 dans le bloc avant 28, par la déformation élastique des agrafes 56 et guide 58, et par les encoches 322 et 324 du support 32. Au préalable, il est nécessaire de desserrer la vis 50 pour relâcher l'effort E₁.

Lorsque les rail 42 et 44 sont ainsi écartés et dégagés des encoches 103, il est alors possible d'ajouter une vanne 100 entre les rails ou d'en retirer une.

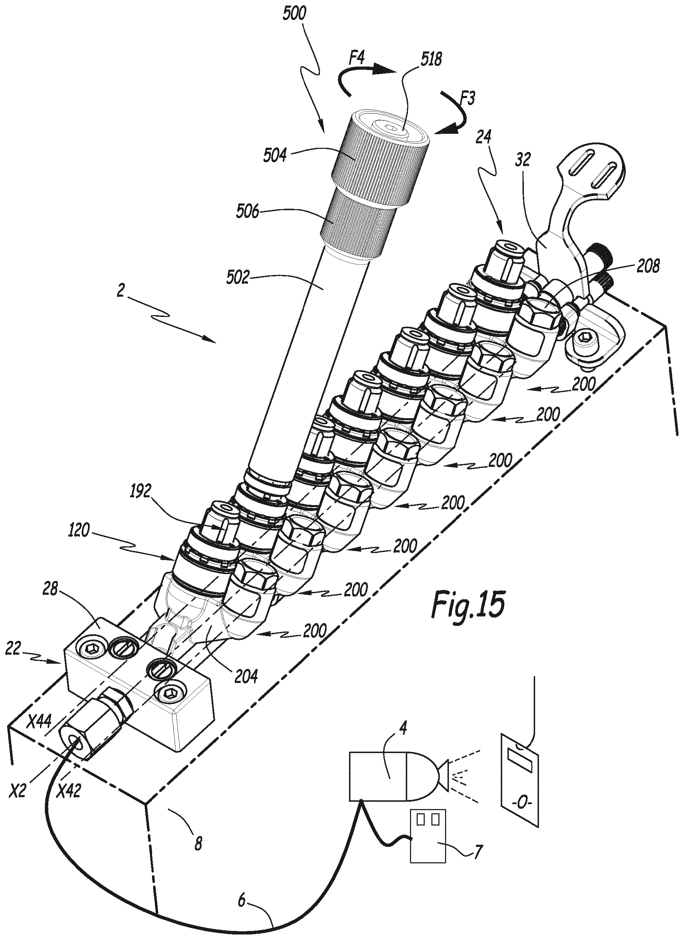

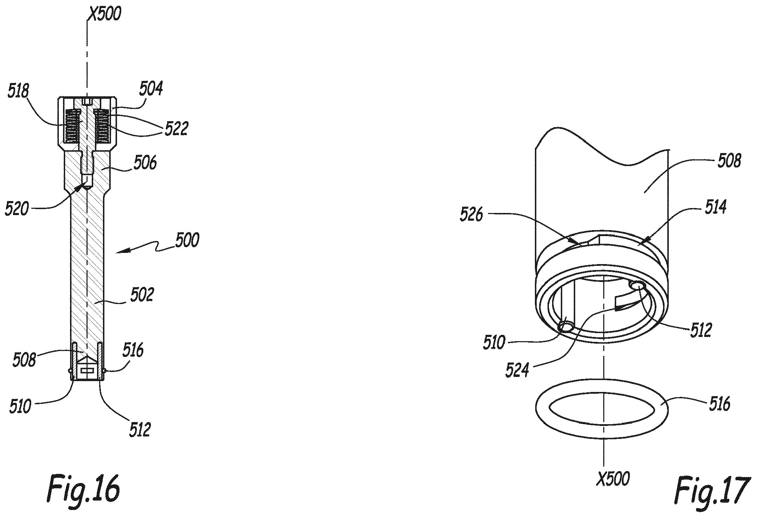

Lorsque toutes les vannes 100 et 200 prévues sont en place entre les rails 42 et 44, la vis 50 peut être serrée, ou resserrée dans le cas d'une opération de maintenance, et les extrémités 424 et 444 des rails 42 et 44 reprennent automatiquement leur place dans les encoches 322 et 324, sous l'action des agrafes 56, des guides 58 et des cônes de centrages des rails présents dans les encoches du support 32. Lorsqu'il convient d'intervenir sur le sous-ensemble 120 d'une des vannes du dispositif 2, on peut utiliser un outil tel que celui représenté aux figures 15 à 17, en relation avec un deuxième mode de réalisation de l'invention.

Dans les deuxième à cinquième modes de réalisation, les éléments analogues à ceux du premier mode de réalisation portent les mêmes références. Sauf précision contraire, ils fonctionnent comme ceux du premier mode de réalisation Dans ce qui suit, on décrit principalement ce qui distingue ces modes de réalisation du premier.

Dans le deuxième mode de réalisation, le dispositif d'alimentation 2 du pistolet 4 comprend uniquement des vannes 200 avec une seule branche latérale 204. En d'autres termes, dans ce mode de réalisation, il n'est pas prévu de recirculation pour le produit de revêtement alimentant chacune des six premières vannes les plus proches du bloc avant 28, étant précisé que la vanne 200 la plus éloignée de ce bloc est une vanne d'alimentation du collecteur commun en produit de nettoyage, comme dans le premier mode de réalisation.

Ce type de vanne 200 sans recirculation peut être utilisée avec des produits de revêtement pour lesquels il n'existe pas de risque de sédimentation lorsque les produits stationnent autour du pointeau 132 d'une vanne 200 en configuration fermée.

Dans ce mode de réalisation, les talons des six vannes 200 les plus proches du bloc avant 28 définissent un tronçon T300 de collecteur commun analogue à celui des vannes 100 du premier mode de réalisation, avec deux branches 115 et 116 non alignées.

Selon un aspect non représenté de l'invention utilisable dans certaines implantations particulières, le talon d'une vanne 200 peut ne présenter qu'une branche analogue à la branche 115 d'une vanne 100.

Un outil 500 est utilisé pour visser ou dévisser un sous-ensemble 120 par rapport au corps 202 d'une vanne. Dans la mesure où les sous-ensembles 120 de ce mode de réalisation sont identiques à ceux du premier mode de réalisation, cet outil 500 pourrait également être utilisé avec les vannes 100 du premier mode de réalisation.

Cet outil 500 comprend un manche 502 centré sur un axe longitudinal X500 de l'outil 100, ainsi qu'une poignée 504 également centrée sur cet axe. Le manche 502 est avantageusement réalisé en métal et comprend une partie moletée 506. La poignée 504 est avantageusement réalisée en matériau synthétique et elle est moletée sur l'extérieur.

Le manche 502 comprend un embout 508 qui est creux et dans lequel sont disposés deux ergots 510 et 512 constitués par deux pions métalliques à section circulaire dont les axes longitudinaux respectifs sont parallèles à l'axe X500. Une gorge périphérique 514 est ménagée autour de l'embout 500 et un joint torique 516 en matériau synthétique est engagé dans cette gorge.

Lorsqu'il convient de monter un sous-ensemble 120 sur le corps 202 d'une vanne 200, l'embout 508 de l'outil 500 est engagé autour de la deuxième portion 153 de la culasse 150 de ce sous-ensemble, en insérant les deux ergots 510 et 512 dans deux encoches longitudinales opposées 192 de cette deuxième portion 153.

De ce fait, le manche 502 et la culasse 150 sont solidarisés en rotation autour des axes X120 et X500 qui sont alors confondus. Il est alors possible d'entraîner en rotation le sous-ensemble 120 pour le visser dans le corps 102 ou 202, en agissant sur la poignée 504, dans le sens de la flèche F1 à la figure 15.

On remarque que l'assemblage entre la poignée 504 et le manche 502 a lieu au moyen d'une vis 518 serrée dans un trou taraudé 520 du manche 502 qui s'étend le long de l'axe X500, avec interposition d'une série de rondelles Belleville 522. Ainsi, un couple exercé sur la poignée 504 est transmis par adhérence de la poignée 504 sur le manche 502. La valeur de couple maximum transmis est déterminée par le nombre de rondelles Belleville 522 et la valeur de leur compression. La valeur de compression est définie par la longueur de la vis épaulée 518. Cette liaison par adhérence est débrayable lorsqu'elle s'oppose au couple résistant exercé par le corps de guidage 121. Le couple résistant génère un glissement entre la poignée 504 et le manche 502, ainsi qu'un glissement entre l'empilage de rondelles Belleville et la face inférieure de la tête de vis 518. En d'autres termes, ce mode d'assemblage de l'outil 500 évite d'exercer un surcouple lors du vissage d'un sous-ensemble 120 sur le corps 102 ou 202 d'une vanne 100 ou 200.

Lorsqu'il convient de dévisser un sous-ensemble 120 préalablement monté sur un corps 102 ou 202, il suffit de coiffer ce sous-ensemble avec l'embout 508 puis d'exercer sur la poignée 504 un couple dans le sens de la flèche F4 à la figure 15. Dans le cas où l'effort résistant exercé par le sous-ensemble 120 serait supérieur au couple maximum transmissible entre les pièces 502 et 504 du fait de la présence des rondelles 522, il est possible à l'opérateur d'exercer le couple de dévissage directement sur la partie moletée 506.

Sur deux secteurs angulaires opposés décalés de 90° autour de l'axe X500 par rapport aux ergots 510 et 512, la gorge 514 débouche dans le volume intérieur de l'embout 508, au point qu'il est créé deux fenêtres 524 et 526 à travers lesquelles le joint torique 516 vient au contact de la surface radiale externe 152 de la portion 153 du sous-ensemble 120, lorsque cette portion est engagée à l'intérieur de l'embout 508. Ceci crée un effort de frottement qui retient axialement le sous-ensemble 120 en place à l'extrémité du manche 502 opposée à la poignée 504.

Ainsi, l'outil 500 permet non seulement d'entraîner en rotation le sous-ensemble 120 mais également de déplacer ce sous-ensemble dans l'espace sans risquer de le faire tomber, ce sous-ensemble étant maintenu en position au niveau de l'extrémité du manche 502 opposée à la poignée 504, du fait de l'effort de contact exercé radialement par le joint torique 516 à travers les fenêtres 524 et 526.

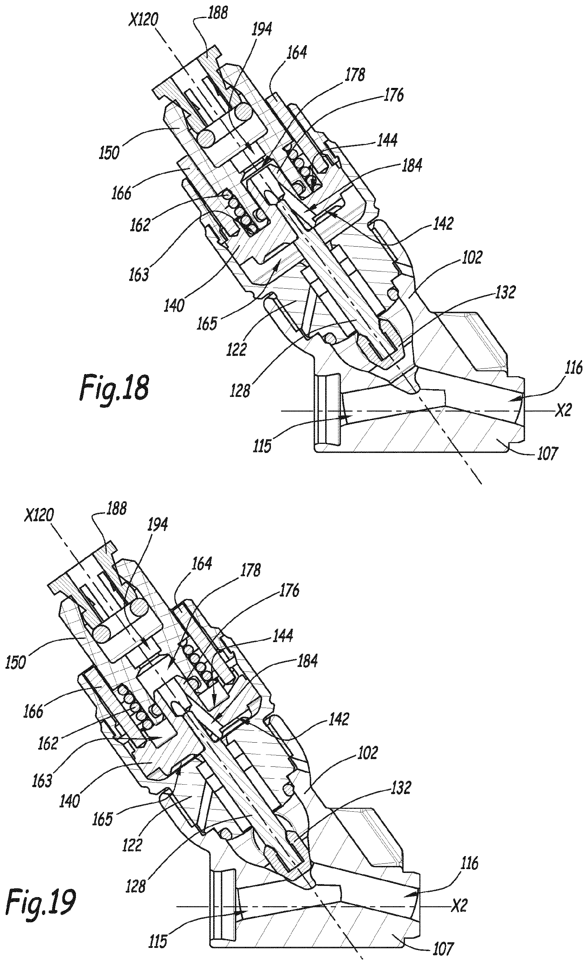

Dans le mode de réalisation des figures 18 et 19, l'embout 176 est prévu sur le piston 140 du sous-ensemble 120, alors que la chambre de transfert 178 est ménagée dans la culasse 150, au niveau du débouché de l'alésage 194.

Une première chambre de volume variable 165 est définie entre la surface 142 du piston 140 tourné vers le pointeau 132 et le corps fileté 122. Par ailleurs, une deuxième chambre de volume variable 163 renferme le ressort 162 de rappel élastique en position du ressort 140.

Un conduit 184 relie le volume intérieur de l'embout 176 à la chambre 165, à travers le piston 140.

Ce mode de réalisation correspond à une inversion de structure par rapport au premier mode de réalisation pour ce qui concerne la répartition de l'embout 176 et de la chambre de transfert 178.

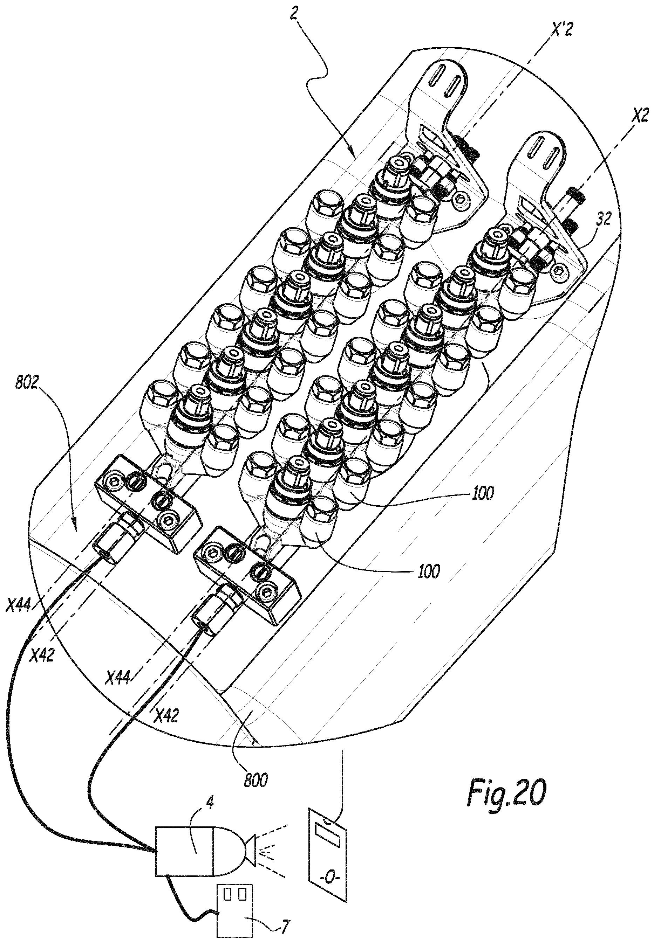

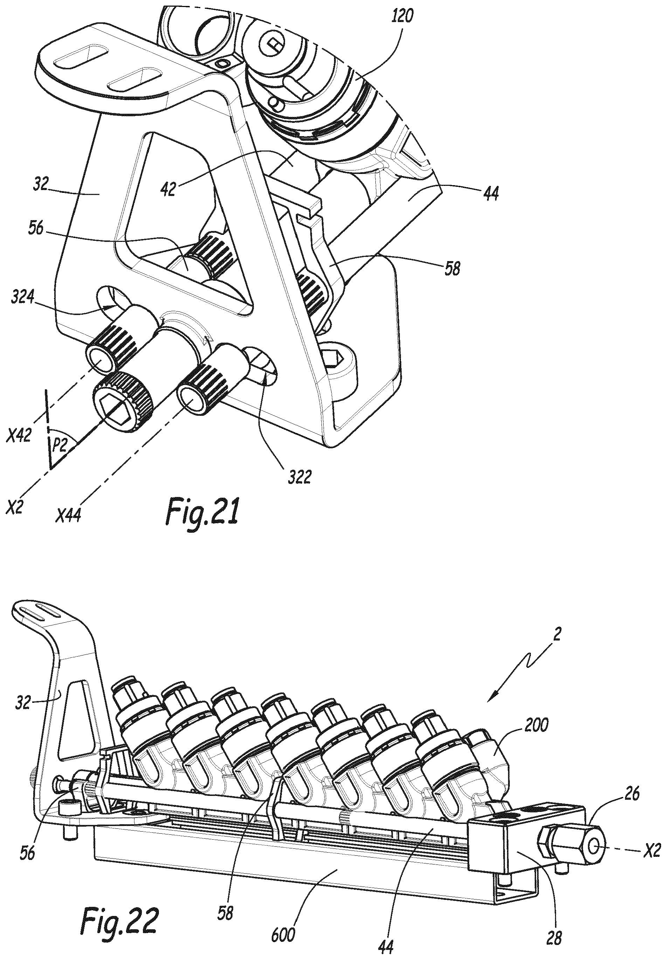

Dans le quatrième mode de réalisation représenté aux figures 20 et 21, le dispositif d'alimentation du projecteur 4 comprend deux rangées de vannes 100, respectivement alignées selon deux axes longitudinaux X2 et X'2.

Deux tuyaux souples 6 et 6' relient ces deux rangées de vannes au projecteur 4.

Comme cela ressort plus particulièrement de la figure 21, l'organe support 32 de ce mode de réalisation est quelque peu différent de celui du premier mode de réalisation, dans la mesure où ses encoches 322 et 324 ne sont pas débouchantes vers l'extérieur à l'opposé du plan P2, mais définissent deux premières zones dans lesquelles sont respectivement reçues les extrémités des rails 42 et 44 en configuration serrée autour des corps 102 des vannes 100, comme représenté à la figure 21. En configuration écartée, ces extrémités sont reçues dans les portions des encoches 322 et 324 qui sont visibles sur cette figure 21 et qui sont plus écartées du plan P2 que les premières zones.

Selon un aspect de l'invention représenté à la figure 22 pour le cinquième mode de réalisation mais qui est transposable aux autres modes, dans le cas où les rails 42 et 44 sont relativement longs, c'est-à-dire dans le cas où un nombre relativement important de vannes 100 ou 200 est juxtaposé le long de l'axe X2 dans le dispositif 2, un rail optionnel 600 peut être mis en place pour augmenter l'inertie en torsion et flexion du dispositif 2 autour de l'axe X2. Ce rail est solidarisé au reste du dispositif 2 par coopération de formes, notamment au niveau du guide 58.

Selon un autre mode de réalisation non représenté de l'invention, le dispositif 2 peut comprendre plusieurs vannes 100 et plusieurs vannes 200 dont la répartition dépend du type de produit de revêtement utilisé.

Dans certaines implantations du dispositif de l'invention, les produits peuvent circuler dans le collecteur 300 de la vanne la plus proche du bloc avant 28 vers la vanne la plus éloignée de ce bloc.

Quel que soit le mode de réalisation, un gaz autre que de l'air peut être utilisé pour commander les déplacements du piston 140.

Quel que soit le mode de réalisation, le dispositif 2 peut être utilisé pour alimenter un projecteur automatique ou un pistolet manuel, électrostatique ou non.

Dans les deuxième à cinquième modes de réalisation, et dans les variantes, il est possible de définir pour chaque vanne 100 ou 200, un cône et un tronc de cône tels que ceux définis avec les références C100 et TC100 pour le premier mode de réalisation. La relation spatiale des axes X120 et des sous-ensembles 120 de ces vannes entre eux et avec ces cônes et troncs de cône est comme expliqué en référence au premier mode de réalisation.

Les modes de réalisation et variantes envisagés ci-dessus peuvent être combinés entre eux pour générer de nouveaux modes de réalisation de l'invention.

## Revendications

1. Dispositif (2) d'alimentation d'au moins un projecteur (4) en produit de revêtement liquide, ce dispositif comprenant plusieurs vannes (100, 200) de contrôle de l'écoulement du produit de revêtement vers le projecteur, ces vannes étant alignées selon un axe principal (X2) du dispositif d'alimentation et chaque vanne comprenant elle-même :
- un pointeau mobile (132),
- un corps de vanne (102, 202) qui définit un volume (104A, 106A, 115, 116) de circulation du produit de revêtement et un siège (114) d'appui du pointeau en configuration fermée de la vanne et qui porte au moins un raccord (108, 110, 208) de branchement d'un tuyau (302, 304) de circulation de produit de revêtement ou de produit de nettoyage,
- des moyens pneumatiques (128, 140, 146) d'entraînement du pointeau en translation selon un axe (X120) d'éloignement/rapprochement par rapport au siège,
ces moyens pneumatiques d'entraînement comprenant un piston (140) solidaire en translation du pointeau et monté coulissant dans un corps de guidage (122), et
l'axe principal (X2) et l'axe (X120) d'éloignement/rapprochement d'une vanne (100, 200) étant concourants en un point remarquable (Q100, Q200) et définissant ensemble un plan principal (P100, P200) de cette vanne,
**caractérisé en ce que**
- l'axe d'éloignement/rapprochement (X120) de chaque vanne (100, 200) est inscrit dans un cône (C100) centré sur un axe (Y100) perpendiculaire à l'axe principal (X2) et appartenant au plan principal (P100, P200) de la vanne, dont le sommet est confondu avec le point remarquable (Q100, Q200) et dont le demi-angle au sommet (γ) a une valeur comprise entre 10° et 60°, de préférence entre 20° et 50°,
- l'axe d'éloignement/rapprochement (X120) forme avec l'axe central (Y100) du cône (C100) un angle (δ) dont la valeur est supérieure à 5°, de préférence supérieure à 30°,
- les axes d'éloignement/rapprochement (X120) des différentes vannes sont parallèles.

2. Dispositif selon la revendication 1, **caractérisé en ce que** des zones (108, 110, 188, 208) de raccordement sur une vanne (100, 200) de tuyaux (302, 304, 400) de circulation de produit de revêtement ou de produit de nettoyage, d'une part, et de circulation de gaz sous pression d'alimentation des moyens pneumatiques (128, 140, 144), d'autre part, sont situées d'un même côté d'un second plan (P'2) contenant l'axe principal (X2) et perpendiculaire aux plans principaux respectifs (P100, P200) des vannes et **en ce que** les directions (Δ302, Δ304, Δ400) de connexion de ces tuyaux sur la vanne sont orientées vers le second plan (P'2).

3. Dispositif selon la revendication 2, **caractérisé en ce que** la direction (Δ302, Δ304,) de connexion sur une vanne (100, 200) de chaque tuyau (302, 304) de circulation de produit de revêtement ou de produit de nettoyage, forme avec l'axe central (Y100) du cône (C100) un angle (δ) dont la valeur est supérieure à 5°.

4. Dispositif selon l'une des revendications 2 ou 3, **caractérisé en ce que** les directions (Δ302, Δ304, Δ400) de connexion, sur une même vanne (100, 200), des tuyaux (302, 304, 400) de circulation de produit de revêtement de produit de nettoyage et de gaz sous pression d'alimentation des moyens pneumatiques (128, 140, 146) sont coplanaires.

5. Dispositif selon l'une des revendications 2 à 4, **caractérisé en ce que** la direction (Δ400) de connexion sur une vanne (100, 200) d'un tuyau (400) de circulation de gaz sous pression d'alimentation des moyens pneumatiques (128, 140, 146) est parallèle à l'axe d'éloignement/rapprochement (X120) de cette vanne.

6. Dispositif selon l'une des revendications précédentes, **caractérisé en ce que** l'axe d'éloignement/rapprochement (X120) est incliné d'un angle (α) compris entre 45° et 85°, de préférence compris entre 50° et 60°, par rapport à l'axe principal (X2) **en ce que** les vannes (100, 200) forment chacune, en aval de leur pointeau (132), une partie (T300) d'un collecteur commun (300) à raccorder au projecteur et **en ce que** la partie (T300) du collecteur commun formée par une vanne (100, 200) comprend deux branches (115, 116) dont les axes longitudinaux respectifs (X115, X116) forment entre eux un angle (β) supérieur à 10°, de préférence compris entre 20° et 30°.

7. Dispositif selon l'une des revendications précédentes, **caractérisé en ce que** les axes centraux respectifs (Y100) des cônes (C100) des différentes vannes (100, 200) sont coplanaires (P2).

8. Dispositif selon l'une des revendications précédentes, **caractérisé en ce que** deux rails (42, 44) définissent entre eux une zone de réception et d'immobilisation réversible des corps (102, 202) des différentes vannes (100, 200).

9. Dispositif selon la revendication 8, **caractérisé en ce que** les rails (42, 44) sont chacun montés, par une première extrémité (422, 442), sur un bloc aval (28) de raccordement à un conduit (6) d'alimentation du projecteur (4), avec une possibilité de variation de leur écartement selon une direction parallèle au plan (P'2) dans lequel est définie la petite base (B100) du tronc de cône (C100) et perpendiculaire à l'axe principal (X2).

10. Dispositif selon la revendication 9, **caractérisé en ce qu'**il comprend un organe (32) de blocage, à une valeur prédéterminée, de l'écartement des rails (42, 44), mesuré selon la direction parallèle au plan (P'2) dans lequel est définie la petite base (B100) du tronc de cône (C100) et perpendiculaire à l'axe principal (X2).

11. Dispositif selon la revendication 10, **caractérisé en ce que** les deuxièmes extrémités (424, 444) des rails (42, 44) sont coincées de façon réversible dans deux encoches (322, 324) formées sur l'organe de blocage (32).

12. Dispositif selon l'une des revendications 10 et 11, **caractérisé en ce que** l'organe de blocage (32) est pourvu de moyens (50) de mise en pression (E1) des corps (102, 202) des vannes contre le bloc aval (28) et entre eux.

13. Dispositif selon l'une des revendications 8 à 12, **caractérisé en ce qu'**il comprend au moins une agrafe (56) élastiquement déformable reliant les deux rails (42, 44) et qui exerce un effort (E2) de rapprochement de leurs deuxièmes extrémités l'une vers l'autre, cet effort étant parallèle au plan (P'2) dans lequel est définie la petite base (B100) du tronc de cône et perpendiculaire à un plan médian (P2) du dispositif comprenant l'axe principal (X2) et les axes d'éloignement/rapprochement des vannes (X120).

14. Dispositif selon l'une des revendications 8 à 13, **caractérisé en ce que** le corps de vanne (102, 202) de chaque vanne (100, 200) est pourvu, de chaque côté, d'une encoche (103) pour la réception partielle d'un rail (42, 44).

## Patentansprüche

1. Vorrichtung (2) zum Versorgen mindestens einer Sprühvorrichtung (4) mit einem flüssigen Beschichtungsstoff, wobei diese Vorrichtung mehrere Ventile (100, 200) zur Steuerung der Strömung des Beschichtungsstoffs zu der Sprühvorrichtung umfasst, wobei diese Ventile gemäß einer Hauptachse (X2) der Versorgungsvorrichtung ausgerichtet sind und jedes Ventil jeweils umfasst:
- einen beweglichen Düsenstift (132),
- einen Ventilkörper (102, 202), der ein Volumen (104A, 106A, 115, 116) zur Zirkulation von Beschichtungsstoff und einen Auflagesitz (114) des Düsenstifts in geschlossener Stellung des Ventils definiert und der mindestens einen Anschluss (108, 110, 208) für die Verbindung mit einer Rohrleitung (302, 304) zur Zirkulation von Beschichtungsstoff oder Reinigungsstoff trägt,
- pneumatische Mittel (128, 140, 146) zum Antrieb des Düsenstifts translatorisch gemäß einer Achse (X120) des Entfernens/Näherns in Bezug auf den Sitz,
wobei diese pneumatischen Antriebsmittel einen Kolben (140) umfassen, der hinsichtlich der Längsbewegung mit dem Düsenstift verbunden ist und gleitend in einem Führungskörper (122) montiert ist, und die Hauptachse (X2) und die Achse (X120) des Entfernens/Annäherns eines Ventils (100, 200) an einem bestimmten Punkt (Q100, Q200) zusammenlaufen und zusammen eine Hauptebene (P100, P200) dieses Ventils definieren,
**dadurch gekennzeichnet, dass**
- die Achse (X120) des Entfernens/Näherns jedes Ventils (100, 200) in einem Kegel (C100) einbeschrieben ist, der auf eine Achse (Y100) senkrecht zur Hauptachse (X2) zentriert ist und zu einer Hauptebene (P100, P200) des Ventils gehört, dessen Scheitelpunkt mit dem bestimmten Punkt (Q100, Q200) übereinstimmt und dessen halber Scheitelöffnungswinkel (γ) einen Wert zwischen 10° und 60°, vorzugsweise zwischen 20° und 50° aufweist,
- die Achse (X120) des Entfernens/Näherns mit der Mittelachse (Y100) des Kegels (C100) einen Winkel (δ) bildet, dessen Wert größer als 50°, vorzugsweise größer als 30° ist,
- die Achsen (X120) des Entfernens/Näherns der unterschiedlichen Ventile parallel sind.

2. Vorrichtung nach Anspruch 1, **dadurch gekennzeichnet, dass** die Zonen (108, 110, 188, 208) für den Anschluss von Rohrleitungen (302, 304, 400) an einem Ventil (100, 200) zur Zirkulation von Beschichtungsstoff oder Reinigungsstoff einerseits und zur Zirkulation von Druckgas zur Versorgung der pneumatischen Mittel (128, 140, 144) andererseits auf einer selben Seite einer zweiten Ebene (P'2), die die Hauptachse (X2) enthält und senkrecht zu den jeweiligen Hauptebenen (P100, P200) der Ventile liegt, angeordnet sind, und dass die Richtungen (Δ302, Δ304, Δ400) zur Verbindung dieser Rohrleitungen mit dem Ventil zu der zweiten Ebene (P'2) gerichtet sind.

3. Vorrichtung nach Anspruch 2, **dadurch gekennzeichnet, dass** die Richtung (Δ302, Δ304) zur Verbindung jeder Rohrleitung (302, 304) zur Zirkulation von Beschichtungsstoff oder Reinigungsstoff mit dem Ventil (100, 200) mit der Mittelachse (Y100) des Kegels (C100) einen Winkel (δ) bildet, dessen Wert größer als 5° ist.

4. Vorrichtung nach einem der Ansprüche 2 oder 3, **dadurch gekennzeichnet, dass** die Richtungen (Δ302, Δ304, Δ400) zur Verbindung der Rohrleitungen (302, 304, 400) zur Zirkulation von Beschichtungsprodukt, Reinigungsprodukt und Druckgas zur Versorgung der pneumatischen Mittel (128, 140, 146) mit einem selben Ventil (100, 200) koplanar sind.

5. Vorrichtung nach einem der Ansprüche 2 bis 4, **dadurch gekennzeichnet, dass** die Richtung (Δ400) der Verbindung einer Rohrleitung (400) zur Zirkulation von Druckgas zur Versorgung der pneumatischen Mittel (128, 140, 146) mit einem Ventil (100, 200) parallel zur Achse des Entfernens/Näherns (X120) dieses Ventils ist.

6. Vorrichtung nach einem der vorhergehenden Ansprüche, **dadurch gekennzeichnet, dass** die Achse (X120) des Entfernens/Näherns um einen Winkel (α) in Bezug auf die Hauptachse (X2) geneigt ist, der zwischen 45° und 85°, vorzugsweise zwischen 50° und 60° liegt, dass die Ventile (100, 200) jeweils stromabwärts zu ihren Düsenstiften (132) einen Teil (T300) eines gemeinsamen an eine Sprühvorrichtung anzuschließenden Kollektors bilden, und dass der Teil des gemeinsamen Kollektors, der von einem Ventil (100, 200) gebildet wird, zwei Zweige (115, 116) umfasst, deren jeweilige Längsachsen (X115, X116) untereinander einen Winkel (β) größer als 10°, vorzugsweise zwischen 20° und 30° bilden.

7. Vorrichtung nach einem der vorhergehenden Ansprüche, **dadurch gekennzeichnet, dass** die jeweiligen Mittelachsen (Y100) der Kegel (C100) der unterschiedlichen Ventile (100, 200) koplanar (P2) sind.

8. Vorrichtung nach einem der vorhergehenden Ansprüche, **dadurch gekennzeichnet, dass** zwei Schienen (42, 44) zwischen sich eine Zone zur Aufnahme und reversiblen Festlegung der Körper (102, 202) der unterschiedlichen Ventile (100, 200) definieren.

9. Vorrichtung nach Anspruch 8, **dadurch gekennzeichnet, dass** die Schienen (42, 44) jede mit einem ersten Ende (422, 442) an einem stromabwärts gelegenen Block (28) zum Anschluss an einen Versorgungskanal (6) der Sprühvorrichtung (4) mit der Möglichkeit der Änderung ihres Abstands gemäß einer Richtung parallel zur Ebene (P'2), in der die kleine Basis (P100) des Kegelstumpfs (C100) definiert ist und die senkrecht zur Hauptachse (X2) liegt, montiert sind.

10. Vorrichtung nach Anspruch 9, **dadurch gekennzeichnet, dass** sie ein Blockierelement (32) des Abstands der Schienen (42, 44) bei einem vorbestimmten Wert, der gemäß der Richtung parallel zur Ebene (P'2) gemessen wird, in der die kleine Basis (B100) des Kegelstumpfes (C100) definiert ist und die senkrecht zur Hauptachse (X2) liegt, umfasst.

11. Vorrichtung nach Anspruch 10, **dadurch gekennzeichnet, dass** die zweiten Enden (424, 444) der Schienen (42, 44) in lösbarer Weise in zwei Ausnehmungen (322, 324), die an dem Blockierelement (32) gebildet sind, verklemmt sind.

12. Vorrichtung nach einem der Ansprüche 10 und 11, **dadurch gekennzeichnet, dass** das Blockierelement (32) mit Mitteln (50) zur Druckbeaufschlagung (E1) der Ventilkörper (102, 202) gegen den stromabwärts gelegenen Block (28) und untereinander versehen ist.

13. Vorrichtung nach einem der Ansprüche 8 bis 12, **dadurch gekennzeichnet, dass** sie mindestens eine elastisch verformbare Klammer (56) umfasst, die die zwei Schienen (42, 44) verbindet und die eine Kraft (E2) zum Annähern der zwei Enden zueinander ausübt, wobei diese Kraft parallel zur Ebene (P'2) liegt, in der die kleine Basis (B100) des Kegelstumpfs definiert ist und die senkrecht zu einer Mittelebene (P2) der Vorrichtung liegt, die die Hauptachse (X2) und die Achsen (X120) des Entfernens/Näherns der Ventile umfasst.

14. Vorrichtung nach einem der Ansprüche 8 bis 13, **dadurch gekennzeichnet, dass** der Ventilkörper (102, 202) jedes Ventils (100, 200) an jeder Seite mit einer Ausnehmung (103) zur teilweisen Aufnahme einer Schiene (42, 44) versehen ist.

## Claims

1. A device (2) for supplying at least one sprayer (4) with a liquid coating product, this device comprising several valves (100, 200) controlling the flow of the coating product toward the sprayer, these valves being aligned along a main axis (X2) of the supply device and each valve in turn comprising:
- a moving needle (132),
- a valve body (102, 202) that defines a circulation volume (104A, 106A, 115, 116) for the coating product and a bearing seat (114) for the needle in the closed configuration of the valve and that bears at least one coupler (108, 110, 208) for connecting a coating product or cleaning product circulation hose (302, 304),
- pneumatic driving means (128, 140, 146) for translating the needle along an axis of separation/approach (X120) relative to the seat,
these pneumatic driving means comprising a piston (140) secured in translation to the needle and mounted sliding in a guide body (122), and
the main axis (X2) and the axis (X120) of separation/approach of a valve (100, 200) being concurrent at a remarkable point (Q100, Q200) and together defining a main plane (P100, P200) of that valve,
**characterized in that**
- the axis of separation/approach (X120) of each valve (100, 200) is fitted into a cone (C100) centered on an axis (Y100) perpendicular to the main axis (X2) and belonging to the main plane (P100, P200) of the valve, the apex of which is combined with the remarkable point (Q100, Q200) and the half cone angle (γ) of which has a value comprised between 10° and 60°, preferably between 20° and 50°,
- the axis of separation/approach (X120) forms, with the central axis (Y100) of the cone (C100), an angle (δ) whose value is greater than 5°, preferably greater than 30°,
- and the axes of separation/approach (X120) of the different valves are parallel.

2. The device according to claim 1, **characterized in that** connecting zones (108, 110, 188, 208) on a valve (100, 200) of coating product or cleaning product circulation hoses (302, 304, 400), on the one hand, and pressurized gas circulation hoses to supply the pneumatic means (128, 140, 144), on the other hand, are situated on a same side (P'2) of a second plane containing the main axis (X2) and perpendicular to the respective main planes (P100, P200) of the valves and **in that** the connection directions (Δ302, Δ304, Δ400) of these hoses on the valve are oriented toward the second plane (P'2).

3. The device according to claim 2, **characterized in that** the connection direction (Δ302, Δ304) on a valve (100, 200) of each coating product or cleaning product circulation hose (302, 304) forms, with the central axis (Y100) of the cone (C100), an angle (δ) having a value greater than 5°.

4. The device according to one of claims 2 or 3, **characterized in that** the connection directions (Δ302, Δ304, Δ400), on a same valve (100, 200), of the hoses (302, 304, 400) for coating product, cleaning product and pressurized gas supplying the pneumatic means (128, 140, 146) are coplanar.

5. The device according to one of claims 2 to 4, **characterized in that** the connection direction (Δ400), on a same valve (100, 200), of a hose (400) for the circulation of pressurized gas to supply the pneumatic means (128, 140, 146) is parallel to the axis of separation/approach (X120) of that valve.

6. The device according to one of the preceding claims, **characterized in that** the axis of separation/approach (X120) is inclined by an angle (α) comprised between 45° and 85°, preferably comprised between 50° and 60°, relative to the main axis (X2) and **in that** the valves (100, 200) each form, downstream from their needle (132), a part (T300) of a shared collector (300) to be connected to the sprayer, and **in that** the part (T300) of the shared collector formed by a valve (100, 200) comprises two branches (115, 116) whereof the respective longitudinal axes (X115, X116) form an angle (β) greater than 10°, preferably comprised between 20° and 30°, between them.

7. The device according to one of the preceding claims, **characterized in that** the respective central axes (Y100) of the cones (C100) of the different valves (100, 200) are coplanar (P2).

8. The device according to one of the preceding claims, **characterized in that** two rails (42, 44) define a zone between them for reversibly receiving and immobilizing the bodies (102, 202) of the different valves (100, 200).

9. The device according to claim 8, **characterized in that** the rails (42, 44) are each mounted, by a first end (422, 442), on a downstream connecting block (28) to a supply line (6) of the sprayer (4), with a possibility of varying their separation in a direction parallel to the plane (P'2) in which the small base (B100) of the cone trunk (C100) is defined and perpendicular to the main axis (X2).

10. The device according to claim 9, **characterized in that** it comprises a member (32) for locking, at a predetermined value, the separation of the rails (42, 44), measured in the direction parallel to the plane (P'2) in which the small base (B100) of the cone trunk (C100) is defined and perpendicular to the main axis (X2).

11. The device according to claim 10, **characterized in that** the second ends (424, 444) of the rails (42, 44) are reversibly jammed in two notches (322, 324) formed on the locking member (32).

12. The device according to one of claims 10 and 11, **characterized in that** the locking member (32) is provided with means (50) for exerting pressure (E1) on the valve bodies (102, 202) against the downstream block (28) and relative to one another.

13. The device according to one of claims 8 to 12, **characterized in that** it comprises at least one elastically deformable staple (56) connecting the two rails (42, 44) and exerts a force (E2) bringing their second ends closer to one another, this force being parallel to the plane (P'2) in which the small base (B100) of the cone trunk is defined and perpendicular to a median plane (P2) of the device comprising the main axis (X2) and the axes of separation/approach of the valves (X120).

14. The device according to one of claims 8 to 13, **characterized in that** the valve body (102, 202) of each valve (100, 200) is provided, on each side, with a notch (103) for partially receiving a rail (42, 44).
